# EUROPEAN PATENT APPLICATION

(11) **EP 4 210 236 A1**
(43) Date of publication of application: **12.07.2023**
(21) Application number: 20957255.1
(22) Date of filing: 16.10.2020
(51) Int. Cl.: H04B 7/04

(54) **SIGNAL TRANSMISSION METHOD AND COMMUNICATION APPARATUS**

(71) Applicant: Huawei Technologies Co., Ltd., Shenzhen, Guangdong 518129 (CN)
(72) Inventor: LI, Tie, Shenzhen, Guangdong 518129 (CN); ZHANG, Yongping, Shenzhen, Guangdong 518129 (CN); FENG, Shulan, Shenzhen, Guangdong 518129 (CN); ZHANG, Xi, Shenzhen, Guangdong 518129 (CN)
(74) Representative: Maiwald GmbH
(86) International application number: PCT/CN2020/121622
(87) International publication number: WO 2022/077477

(57) **Abstract**

Embodiments of this application provide a signal transmission method and a communication apparatus. A terminal device receives first request signaling, where the first request signaling is used to request the terminal device to perform a first operation indicated by the first request signaling, and the first operation is an operation related to an antenna panel. The terminal device sends, to a network device, answer signaling for responding to the first request signaling, where the answer signaling indicates information about a second operation related to the antenna panel. It can be learned that the method provided in embodiments of this application can better coordinate antenna panel management and control between the network device and the terminal device, and implement interworking and interconnection of antenna panel status management and control, thereby improving transmission performance of a system.

## Description

### TECHNICAL FIELD

This application relates to the wireless communication field, and more specifically, to a signal transmission method and a communication apparatus.

### BACKGROUND

In some communication systems, for example, in a new radio access technology (new radio access technology, NR) of a fifth generation (5th generation, 5G) communication system, to resist a path loss in a high frequency scenario, a transmit end and a receive end may separately obtain gains through beamforming (beamforming). A beam may be received or sent via an antenna panel, and due to spatial directivity of the beam, a terminal device may be configured with a plurality of antenna panels (antenna panels), to meet wide-area coverage. Use of the antenna panels is mainly managed and controlled through signaling delivered by a network device.

However, use of the antenna panels is restricted by a plurality of factors such as a power consumption status, a latency, and a hardware processing capability of the terminal device. Because the network device does not sense statuses of the antenna panels of the terminal device, when the statuses of the antenna panels scheduled by the network device do not match a status of the terminal device, interworking may fail. Therefore, how to implement interworking and interconnection of antenna panel control and management is an urgent problem to be resolved.

### SUMMARY

This application provides a signal transmission method and a communication apparatus, to better coordinate antenna panel management and control between a network device and a terminal device, and implement interworking and interconnection of antenna panel status management and control, thereby improving transmission performance of a system.

According to a first aspect, this application provides **a signal transmission method.** The method may be performed by a **terminal device,** or may be performed by a chip disposed in the terminal device. This is not limited in this application.

Specifically, the method includes: The terminal device receives first request signaling, where the first request signaling is used to perform a first operation, and the first operation is an operation related to an antenna panel. The terminal device sends answer signaling for responding to the first request signaling, where the answer signaling indicates information about a second operation related to the antenna panel.

It can be learned that the method can better coordinate antenna panel management and control between the network device and the terminal device, and implement interworking and interconnection of antenna panel status management and control, thereby improving transmission performance of a system.

With reference to the first aspect, in some possible implementations, the answer signaling for the first request signaling includes acknowledgment information.

With reference to the first aspect, in some possible implementations, the answer signaling for the first request signaling includes negative acknowledgment information.

With reference to the first aspect, in some possible implementations, the answer signaling further includes the information about the second operation.

With reference to the first aspect, in some possible implementations, the answer signaling includes the information about the second operation.

With reference to the first aspect, in some possible implementations, the first operation is the same as the second operation.

With reference to the first aspect, in some possible implementations, the first operation is different from the second operation.

With reference to the first aspect, in some possible implementations, the terminal device receives second request signaling, where the second request signaling indicates the terminal device to perform the second operation. The terminal device performs the second operation based on the second request signaling.

With reference to the first aspect, in some possible implementations, the first operation or the second operation includes, for example, but is not limited to, at least one of the following: panel activation, panel deactivation, panel measurement, panel measurement result reporting, panel switching, panel status reporting, and panel transmission.

With reference to the first aspect, in some possible implementations, the first operation or the second operation includes, for example, but is not limited to, at least one of the following: panel group activation, panel group deactivation, panel group measurement, panel group measurement result reporting, panel group switching, panel group status reporting, and panel group transmission.

With reference to the first aspect, in some possible implementations, the information about the second operation includes at least one of the following: a panel index, a panel group index, an activated state of a panel or a panel group, a deactivated state of a panel or a panel group, identifiers of a plurality of panels that simultaneously receive a signal or a channel, state identifiers of the plurality of panels that simultaneously receive a signal or a channel, identifiers of a plurality of panels that simultaneously send a signal or a channel, state identifiers of the plurality of panels that simultaneously send a signal or a channel, identifiers of one or more panel groups that simultaneously receive a signal or a channel, state identifiers of the one or more panel groups that simultaneously receive a signal or a channel, identifiers of one or more panel groups that simultaneously send a signal or a channel, state identifiers of the one or more panel groups that simultaneously send a signal or a channel, a latency of switching between panels and/or panel groups, a panel status mode, a panel status mode index, panel activation duration, a panel activation periodicity, a start/end time point of panel activation, a panel activation time percentage, and a panel activation time offset.

According to a second aspect, this application provides a signal transmission method. The method may be performed by a **network device,** or may be performed by a chip disposed in the network device. This is not limited in this application.

Specifically, the method includes: The network device sends first request signaling, where the first request signaling is used to perform a first operation, and the first operation is an operation related to an antenna panel. The network device receives answer signaling for responding to the first request signaling, where the answer signaling indicates information about a second operation related to the antenna panel.

It can be learned that the method can better coordinate antenna panel management and control between the network device and the terminal device, and implement interworking and interconnection of antenna panel status management and control, thereby improving transmission performance of a system.

With reference to the second aspect, in some possible implementations, the answer signaling for the first request signaling includes acknowledgment information.

With reference to the second aspect, in some possible implementations, the answer signaling for the first request signaling includes negative acknowledgment information.

With reference to the second aspect, in some possible implementations, the answer signaling further includes the information about the second operation.

With reference to the second aspect, in some possible implementations, the answer signaling includes the information about the second operation.

With reference to the second aspect, in some possible implementations, the first operation is the same as the second operation.

With reference to the second aspect, in some possible implementations, the first operation is different from the second operation.

With reference to the second aspect, in some possible implementations, the network device sends second request signaling, where the second request signaling indicates the terminal device to perform the second operation.

With reference to the second aspect, in some possible implementations, the first operation or the second operation includes, for example, but is not limited to, at least one of the following: panel activation, panel deactivation, panel measurement, panel measurement result reporting, panel switching, panel status reporting, and panel transmission.

With reference to the second aspect, in some possible implementations, the first operation or the second operation includes, for example, but is not limited to, at least one of the following: panel group activation, panel group deactivation, panel group measurement, panel group measurement result reporting, panel group switching, panel group status reporting, and panel group transmission.

With reference to the second aspect, in some possible implementations, the information about the second operation includes at least one of the following: a panel index, a panel group index, an activated state of a panel or a panel group, a deactivated state of a panel or a panel group, identifiers of a plurality of panels that simultaneously receive a signal or a channel, state identifiers of the plurality of panels that simultaneously receive a signal or a channel, identifiers of a plurality of panels that simultaneously send a signal or a channel, state identifiers of the plurality of panels that simultaneously send a signal or a channel, identifiers of one or more panel groups that simultaneously receive a signal or a channel, state identifiers of the one or more panel groups that simultaneously receive a signal or a channel, identifiers of one or more panel groups that simultaneously send a signal or a channel, state identifiers of the one or more panel groups that simultaneously send a signal or a channel, a latency of switching between panels and/or panel groups, a panel status mode, a panel status mode index, panel activation duration, a panel activation periodicity, a start/end time point of panel activation, a panel activation time percentage, and a panel activation time offset.

According to a third aspect, this application provides **a signal transmission method.** The method may be performed by a **terminal device,** or may be performed by a chip disposed in the terminal device. This is not limited in this application.

Specifically, the method includes: The terminal device receives first request signaling, where the first request signaling is used to request first information, and the first information is information related to an antenna panel. The terminal device sends answer signaling for responding to the first request signaling, where the answer signaling indicates second information related to the antenna panel.

With reference to the third aspect, in some possible implementations, the answer signaling for the first request signaling includes acknowledgment information.

With reference to the third aspect, in some possible implementations, the answer signaling for the first request signaling includes negative acknowledgment information.

With reference to the third aspect, in some possible implementations, the answer signaling further includes the second information.

With reference to the third aspect, in some possible implementations, the first information is the same as the second information.

With reference to the third aspect, in some possible implementations, the first information is different from the second information.

With reference to the third aspect, in some possible implementations, the terminal device receives second request signaling, and the terminal device performs a related operation based on the second request signaling.

With reference to the third aspect, in some possible implementations, the first information or the second information includes at least one of the following: a panel index, a panel group index, an activated state of a panel or a panel group, a deactivated state of a panel or a panel group, identifiers of a plurality of panels that simultaneously receive a signal or a channel, state identifiers of the plurality of panels that simultaneously receive a signal or a channel, identifiers of a plurality of panels that simultaneously send a signal or a channel, state identifiers of the plurality of panels that simultaneously send a signal or a channel, identifiers of one or more panel groups that simultaneously receive a signal or a channel, state identifiers of the one or more panel groups that simultaneously receive a signal or a channel, identifiers of one or more panel groups that simultaneously send a signal or a channel, state identifiers of the one or more panel groups that simultaneously send a signal or a channel, a latency of switching between panels and/or panel groups, a panel status mode, a panel status mode index, panel activation duration, a panel activation periodicity, a start/end time point of panel activation, a panel activation time percentage, and a panel activation time offset.

With reference to the third aspect, in some possible implementations, the terminal device performs the related operation based on the second request signaling. The related operation includes, for example, but is not limited to, at least one of the following: panel activation, panel deactivation, panel measurement, panel measurement result reporting, panel switching, panel status reporting, and panel transmission.

With reference to the third aspect, in some possible implementations, the terminal device performs the related operation based on the second request signaling. The related operation includes, for example, but is not limited to, at least one of the following: panel group activation, panel group deactivation, panel group measurement, panel group measurement result reporting, panel group switching, panel group status reporting, and panel group transmission.

According to a fourth aspect, this application provides a signal transmission method. The method may be performed by a network device, or may be performed by a chip disposed in the network device. This is not limited in this application.

Specifically, the method includes: The network device sends first request signaling, where the first request signaling is used to request first information, and the first information is information related to an antenna panel. The network device receives answer signaling for responding to the first request signaling, where the answer signaling indicates second information related to the antenna panel.

With reference to the fourth aspect, in some possible implementations, the answer signaling for the first request signaling includes acknowledgment information.

With reference to the fourth aspect, in some possible implementations, the answer signaling for the first request signaling includes negative acknowledgment information.

With reference to the fourth aspect, in some possible implementations, the answer signaling further includes the second information.

With reference to the fourth aspect, in some possible implementations, the first information is the same as the second information.

With reference to the fourth aspect, in some possible implementations, the first information is different from the second information.

With reference to the fourth aspect, in some possible implementations, the network device sends second request signaling, where the second request signaling indicates the terminal device to perform a related operation.

With reference to the fourth aspect, in some possible implementations, the first information or the second information includes at least one of the following: a panel index, a panel group index, an activated state of a panel or a panel group, a deactivated state of a panel or a panel group, identifiers of a plurality of panels that simultaneously receive a signal or a channel, state identifiers of the plurality of panels that simultaneously receive a signal or a channel, identifiers of a plurality of panels that simultaneously send a signal or a channel, state identifiers of the plurality of panels that simultaneously send a signal or a channel, identifiers of one or more panel groups that simultaneously receive a signal or a channel, state identifiers of the one or more panel groups that simultaneously receive a signal or a channel, identifiers of one or more panel groups that simultaneously send a signal or a channel, state identifiers of the one or more panel groups that simultaneously send a signal or a channel, a latency of switching between panels and/or panel groups, a panel status mode, a panel status mode index, panel activation duration, a panel activation periodicity, a start/end time point of panel activation, a panel activation time percentage, and a panel activation time offset.

With reference to the fourth aspect, in some possible implementations, the second request signaling indicates the terminal device to perform the related operation. The related operation includes, for example, but is not limited to, at least one of the following: panel activation, panel deactivation, panel measurement, panel measurement result reporting, panel switching, panel status reporting, and panel transmission.

With reference to the fourth aspect, in some possible implementations, the second request signaling indicates the terminal device to perform the related operation. The related operation includes, for example, but is not limited to, at least one of the following: panel group activation, panel group deactivation, panel group measurement, panel group measurement result reporting, panel group switching, panel group status reporting, and panel group transmission.

According to a fifth aspect, this application further provides a **communication apparatus.** The communication apparatus has some or all functions of the **terminal device** that implements the first aspect or the third aspect. For example, a function of the apparatus may include functions in some or all embodiments of the terminal device in this application, or may include a function of separately implementing any one of embodiments of this application. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another device. The communication apparatus may further include a storage unit. The storage unit is configured to be coupled to the processing unit and the communication unit, and the storage unit stores program instructions and data that are necessary for the communication apparatus.

In an implementation, the communication apparatus includes a communication unit and a processing unit.

The communication unit is configured to receive first request signaling. The first request signaling is used to perform a first operation, and the first operation is an operation related to an antenna panel.

The communication unit is further configured to send, via the processing unit, answer signaling for responding to the first request signaling. The answer signaling indicates information about a second operation related to the antenna panel.

For related content of this implementation, refer to the related content of the first aspect. Details are not described herein again.

In another implementation, the communication apparatus may include a processor and a transceiver.

The transceiver is configured to receive first request signaling. The first request signaling is used to perform a first operation, and the first operation is an operation related to an antenna panel.

The transceiver is further configured to send, via the processor, answer signaling for responding to the first request signaling. The answer signaling indicates information about a second operation related to the antenna panel.

For related content of this implementation, refer to the related content of the first aspect. Details are not described herein again.

In still another implementation, the communication apparatus may include a communication unit and a processing unit.

The communication unit is configured to receive first request signaling. The first request signaling is used to request first information, and the first information is information related to an antenna panel.

The communication unit is further configured to send, via the processing unit, answer signaling for responding to the first request signaling. The answer signaling indicates second information related to the antenna panel.

For related content of this implementation, refer to the related content of the third aspect. Details are not described herein again.

In another implementation, the communication apparatus may include a processor and a transceiver.

The transceiver is configured to receive first request signaling. The first request signaling is used to request first information, and the first information is information related to an antenna panel.

The transceiver is further configured to send, via the processor, answer signaling for responding to the first request signaling. The answer signaling indicates second information related to the antenna panel.

For related content of this implementation, refer to the related content of the third aspect. Details are not described herein again.

In an implementation process, the processor may be configured to perform, for example, but not limited to, baseband related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, an increasing quantity of components may be integrated onto a same chip. For example, a digital baseband processor and a plurality of application processors (including but not limited to a graphics processing unit and a multimedia processor) may be integrated onto a same chip. Such a chip may be referred to as a system on chip (System on Chip). Whether the components are separately disposed on different chips or integrated and disposed on one or more chips usually depends on a requirement of a product design. Implementation forms of the foregoing components are not limited in embodiments of this application.

According to a sixth aspect, this application further provides a **communication apparatus.** The communication apparatus has some or all functions of the **network device** that implements the example methods according to the second aspect or the fourth aspect. For example, a function of the communication apparatus may include functions in some or all embodiments of this application, or may include a function of separately implementing any one of embodiments of this application. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another device. The communication apparatus may further include a storage unit. The storage unit is configured to be coupled to the processing unit and a sending unit, and the storage unit stores program instructions and data that are necessary for the communication apparatus.

In an implementation, the communication apparatus includes a communication unit and a processing unit.

The communication unit is configured to send first request signaling. The first request signaling is used to perform a first operation, and the first operation is an operation related to an antenna panel.

The communication unit is further configured to receive, via the processing unit, answer signaling for responding to the first request signaling. The answer signaling indicates information about a second operation related to the antenna panel.

For related content of this implementation, refer to the related content of the second aspect. Details are not described herein again.

In another implementation, the communication apparatus may include a processor and a transceiver.

The transceiver is configured to send first request signaling. The first request signaling is used to perform a first operation, and the first operation is an operation related to an antenna panel.

The transceiver is further configured to receive, via the processor, answer signaling for responding to the first request signaling. The answer signaling indicates information about a second operation related to the antenna panel.

For related content of this implementation, refer to the related content of the second aspect. Details are not described herein again.

In still another implementation, the communication apparatus may include a communication unit and a processing unit.

The communication unit is configured to send first request signaling. The first request signaling is used to request first information, and the first information is information related to an antenna panel.

The communication unit is further configured to receive, via the processing unit, answer signaling for responding to the first request signaling. The answer signaling indicates second information related to the antenna panel.

For related content of this implementation, refer to the related content of the fourth aspect. Details are not described herein again.

In another implementation, the communication apparatus may include a processor and a transceiver.

The transceiver is configured to send first request signaling. The first request signaling is used to request first information, and the first information is information related to an antenna panel.

The transceiver is further configured to receive, via the processor, answer signaling for responding to the first request signaling. The answer signaling indicates second information related to the antenna panel.

For related content of this implementation, refer to the related content of the fourth aspect. Details are not described herein again.

In an implementation process, the processor may be configured to perform, for example, but not limited to, baseband related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, an increasing quantity of components may be integrated onto a same chip. For example, a digital baseband processor and a plurality of application processors (including but not limited to a graphics processing unit, a multimedia processor, and the like) may be integrated onto a same chip. Such a chip may be referred to as a system on chip (System on Chip). Whether the components are separately disposed on different chips or integrated and disposed on one or more chips usually depends on a requirement of a product design. Implementation forms of the foregoing components are not limited in embodiments of this application.

According to a seventh aspect, this application further provides a **processor,** configured to perform the foregoing methods. In a process of performing these methods, a process of sending the foregoing information and a process of receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is output by the processor, other processing may further need to be performed on the information before the information arrives at the transceiver. Similarly, when the processor receives the foregoing input information, the transceiver receives the foregoing information, and inputs the foregoing information into the processor. Further, after the transceiver receives the foregoing information, other processing may need to be performed on the foregoing information before the information is input into the processor.

Based on the foregoing principle, for example, the sending answer signaling for responding to the first request signaling mentioned in the foregoing method may be understood as that the processor outputs the answer signaling for responding to the first request signaling. For another example, receiving the first request signaling may be understood as that the processor receives the input first request signaling.

Unless otherwise specified, operations such as transmission, sending, and receiving related to the processor may be more generally understood as operations such as output, receiving, and input of the processor if the operations do not conflict with actual functions or internal logic of the operations in related descriptions, instead of operations such as transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in this embodiment of this application.

According to an eighth aspect, this application further provides a **communication system.** The system includes at least one terminal device and at least one network device in the foregoing aspects. In another possible design, the system may further include another device that interacts with the terminal or the network device in the solutions provided in this application.

According to a ninth aspect, this application provides a computer-readable storage medium, configured to store computer software instructions. When the instructions are executed by a computer, the method according to the first aspect or the third aspect is implemented.

According to a tenth aspect, this application provides a **computer-readable storage medium,** configured to store computer software instructions. When the instructions are executed by a computer, a communication apparatus is enabled to implement the method according to the second aspect or the fourth aspect.

According to an eleventh aspect, this application further provides a computer program product including instructions. When the computer program product runs on a computer, the computer is enabled to perform the method according to the first aspect or the third aspect.

According to a twelfth aspect, this application further provides a **computer program product** including instructions. When the computer program product runs on a computer, the computer is enabled to perform the method according to the second aspect or the fourth aspect.

According to a thirteenth aspect, this application provides a **chip system.** The chip system includes a processor and an interface. The interface is configured to obtain a program or instructions. The processor is configured to invoke the program or the instructions to implement or support a terminal device in implementing functions in the first aspect or the third aspect, for example, determining or processing at least one of data and information in the foregoing methods.

In a possible design, the chip system further includes a memory. The memory is configured to store program instructions and data that are necessary for the terminal device. The chip system may include a chip, or may include a chip and another discrete component.

According to a fourteenth aspect, this application provides a chip system. The chip system includes a processor and an interface. The interface is configured to obtain a program or instructions. The processor is configured to invoke the program or the instructions to implement or support a network device in implementing functions in the second aspect or the fourth aspect, for example, determining or processing at least one of data and information in the foregoing methods.

In a possible design, the chip system further includes a memory. The memory is configured to store program instructions and data that are necessary for the network device. The chip system may include a chip, or may include a chip and another discrete component.

### BRIEF DESCRIPTION OF DRAWINGS

FIG. 1 is a schematic diagram of a communication system applicable to a signal transmission method and a communication apparatus according to an embodiment of this application;
FIG. 2 is a schematic flowchart of a signal transmission method according to an embodiment of this application;
FIG. 3 is another schematic flowchart of a signal transmission method according to an embodiment of this application;
FIG. 4 is still another schematic flowchart of a signal transmission method according to an embodiment of this application;
FIG. 5 is yet another schematic flowchart of a signal transmission method according to an embodiment of this application;
FIG. 6 is a schematic diagram of a communication apparatus according to an embodiment of this application;
FIG. 7 is a schematic diagram of a structure of a terminal device according to an embodiment of this application; and
FIG. 8 is a schematic diagram of a structure of a network device according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, and a universal mobile telecommunications system (universal mobile telecommunications system, UMTS). With continuous development of a communication system, technical solutions in this application are applied to a 5th generation (5th generation, 5G) system or a new radio (new radio, NR) system, applied to a future network, such as a 6G system or even a future system, or applied to a device-to-device (device-to-device, D2D) system, a machine-to-machine (machine-to-machine, M2M) system, or the like.

It should be understood that, the network device in the communication system may be any device having a wireless transceiver function or a chip that can be disposed in the device. The device includes but is not limited to: an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home evolved NodeB (home evolved NodeB, or home NodeB, HNB), a baseband unit (Baseband Unit, BBU), an access point (Access Point, AP) in a wireless fidelity (Wireless Fidelity, Wi-Fi) system, a wireless relay node, a wireless backhaul node, a transmission point (transmission point, TP), a transmission reception point (TRP), or the like, may be a device used in 5G, 6G, or even a future system, for example, NR, a gNB in a system, or a transmission point (TRP or TP), or one or a group of (including a plurality of antenna panels) antenna panels of a base station in a 5G system, or may be a network node that forms a gNB or a transmission point, for example, a baseband unit (BBU), a distributed unit (distributed unit, DU), a picocell (Picocell), a femtocell (Femtocell), a vehicle-to-everything (vehicle-to-everything, V2X), or a road side unit (road side unit, RSU) in an intelligent driving scenario.

In some deployments, a gNB may include a central unit (central unit, CU) and a DU. The gNB may further include a radio frequency unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer. The DU implements functions of a radio link control (radio link control, RLC) layer, a media access control (media access control, MAC) layer, and a physical (physical, PHY) layer. Information at the RRC layer eventually becomes information at the PHY layer, or is converted from the information at the PHY layer. Therefore, in the architecture, higher layer signaling such as RRC layer signaling or PHCP layer signaling may also be considered as being sent by the DU or sent by the DU and the RU. It may be understood that the network device may be a CU node, a DU node, or a device including the CU node and the DU node. In addition, the CU may be classified as a network device in an access network RAN, or the CU may be classified as a network device in a core network CN. This is not limited herein.

In embodiments disclosed in this application, an apparatus configured to implement functions of the network device may be a network device, or may be an apparatus that can support the network device in implementing the functions, for example, a chip system. The apparatus may be installed in the network device.

In embodiments disclosed in this application, the technical solutions provided in embodiments disclosed in this application are described by using an example in which an apparatus configured to implement a function of the network device is a network device, and the network device is a base station.

It should be further understood that a terminal device in the communication system may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer with a wireless transceiver function, a virtual reality (Virtual Reality, VR) terminal device, an augmented reality (Augmented Reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wireless terminal or an RSU of a wireless terminal type in the foregoing V2X vehicle-to-everything, or the like. An application scenario is not limited in embodiments of this application.

In addition, to facilitate understanding of embodiments of this application, the following several descriptions are provided.

First, in embodiments of this application, an "indication" may include a direct indication and an indirect indication, or may include an explicit indication and an implicit indication. Information indicated by specific information (configuration information in the following descriptions) is referred to as to-be-indicated information. In a specific implementation process, the to-be-indicated information may be indicated in a plurality of manners, for example, but not limited to, directly indicating the to-be-indicated information, for example, the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

Second, in the following embodiments, an NR network scenario in a wireless communication network is used as an example of some scenarios for description. It should be noted that the solutions in the embodiments disclosed in this application may be further applied to another wireless communication network, and a corresponding name may also be replaced with a name of a corresponding function in the another wireless communication network.

Third, in the following embodiments, "first", "second", and other numbers are merely for differentiation for ease of description. In the following embodiments, technical features in a type of technical features are distinguished by using "first", "second", "third", and the like. The technical features described by "first", "second", and "third" have no sequence or size sequence. This is not intended to limit the scope of embodiments of this application. For example, different indication information, different beams, and different panels are distinguished.

Fourth, "at least one" means one or more, and "a plurality of" means two or more. In addition, "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one of a, b, and c may indicate: a, or b, or c, a and b, a and c, b and c, or a, b, and c, where a, b, and c may be singular or plural.

Fifth, aspects, embodiments, or features of this application are presented in embodiments disclosed in this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Sixth, in the embodiments disclosed in this application, "of (of)", "relevant (relevant)", and "corresponding (corresponding)" may be interchangeably used sometimes. It should be noted that expressed meanings are consistent when differences are not emphasized.

Seventh, in the following embodiments, "predefinition" may be defined in a protocol, may be implemented by prestoring corresponding code or a corresponding table in a device (for example, including a terminal device and a network device), or may be implemented in another manner that may be used to indicate related information. A specific implementation is not limited in this application.

For ease of understanding embodiments of this application, several terms used in this application are first briefly described.

### 1. Beam

The beam may be understood as a spatial filter (spatial filter) or a spatial parameter (spatial parameter). A beam used for sending a signal may be referred to as a transmission beam (transmission beam, Tx beam), and may be a spatial domain transmit filter (spatial domain transmit filter) or a spatial transmit parameter (spatial transmit parameter, spatial Tx parameter). A beam used for receiving a signal may be referred to as a reception beam (reception beam, Rx beam), and may be a spatial domain receive filter (spatial domain receive filter) or a spatial receive parameter (spatial receive parameter, spatial Rx parameter).

A technology for forming the beam may be a beamforming technology or another technology. For example, the beamforming technology may be specifically a digital beamforming technology, an analog beamforming technology, a hybrid digital/analog beamforming technology, or the like. The transmission beam may refer to signal strength distribution formed in different directions in space after a signal is transmitted by an antenna, and the reception beam may refer to signal strength distribution in different directions in space of a radio signal received from an antenna.

In an NR protocol, the beam may be, for example, a spatial filter (spatial filter). However, it should be understood that this application does not exclude a possibility that another term is defined in a future protocol to represent a same or similar meaning.

### 2. Antenna panel

Antenna panel: panel (panel) for short. One or more receive beams and one or more transmit beams may be configured for each antenna panel. Therefore, the antenna panel may also be understood as a beam or a beam group. A communication device, such as a terminal device or a network device, may receive a signal by using a receive beam on an antenna panel, or may transmit a signal by using a transmit beam on an antenna panel.

In a discussion process of an NR standard, the antenna panel may also be considered as a logical entity including a plurality of physical antenna mappings.

In embodiments of this application, for example, the panel may be distinguished by a resource of an uplink reference signal. The uplink reference signal may be, for example, a sounding reference signal (sounding reference signal, SRS). As an example rather than a limitation, one antenna panel may correspond to an identifier (identifier, ID) of one SRS resource set (resource set). In other words, one SRS resource set ID may indicate one panel.

The panel may also be distinguished by a panel ID or a panel index. For example, a transmission configuration indicator (transmission configuration indicator, TCI) may indicate the panel ID.

For example, one antenna panel may correspond to one SRS resource set ID, that is, one SRS resource set ID may indicate one antenna panel. Alternatively, an ID of the antenna panel may be directly associated with a reference signal resource or a reference signal resource set. Alternatively, the ID of the antenna panel may be allocated by a target reference signal resource or the reference signal resource set. Alternatively, the ID of the antenna panel may be additionally configured in spatial relationship (spatial relationship) information.

In addition, for receiving and sending of a single antenna panel, implementation of the terminal device is simple with low power consumption and heat dissipation and simple panel management. However, a period of time (for example, 2 ms to 3 ms) needs to be reserved during panel activation and switching, thereby reducing system efficiency. For simultaneous receiving and sending of the antenna panel, improving system robustness can improve system efficiency. However, implementation of the terminal device is more complex with high power consumption and heat dissipation.

It should be understood that related content of the antenna panel is merely for ease of understanding, and does not constitute a limitation on the protection scope of embodiments of this application. This application does not exclude a possibility of defining another term that can implement a same or similar function in an existing or future protocol. For example, in a future protocol, after the ID of the antenna panel is improved, the ID of the antenna panel is still applicable to embodiments of this application.

### 3. Identifier for simultaneously receiving a signal or a channel (identifier for simultaneous receiving), and identifier for simultaneously sending a signal or a channel (identifier for simultaneous sending)

An identifier for simultaneously receiving a signal or a channel and an identifier for simultaneously sending a signal or a channel respectively indicate that a plurality of panels have a capability of simultaneously receiving a signal or a channel, and a plurality of antenna panels have a capability of simultaneously sending a signal or a channel. Whether the panel has a capability of simultaneously receiving a signal or a channel is indicated by an identifier, whether the panel has a capability of simultaneously sending a signal or a channel is indicated by an identifier, or whether the panel is in a state of simultaneously receiving a signal or a channel is indicated by a state identifier, or whether the panel is in a state of simultaneously sending a signal or a channel is indicated by a state identifier.

In embodiments of this application, signals generally are various uplink/downlink reference signals and data that are sent on an uplink physical channel. For example, but not limited to, the uplink signal may include a sounding reference signal (sounding reference signal, SRS), a PUCCH demodulation reference signal (de-modulation reference signal, DMRS), a PUSCH DMRS, an uplink phase noise tracking signal (phase noise tracking reference signal, PTRS), and the like. The uplink signal may alternatively be a data signal. The downlink signal may include a primary synchronization signal (primary synchronization signal, PSS), a secondary synchronization signal (secondary synchronization signal, SSS), a PDCCH DMRS, a PDSCH DMRS, a downlink PTRS, a channel state information-reference signal (channel state information-reference signal, CSI-RS), a cell reference signal (cell reference signal, CRS), a time-domain or frequency-domain tracking reference signal (tracking reference signal, TRS), a positioning reference signal (positioning reference signal, PRS), and the like. The downlink signal may alternatively be a data signal.

In embodiments of this application, the channel includes an uplink physical channel and/or a downlink physical channel. For example, but not limited to, the uplink physical channel may include a random access channel (random access channel, RACH), a physical uplink control channel (physical uplink control channel, PUCCH), a physical uplink shared channel (physical uplink shared channel, PUSCH), and the like. The downlink physical channel may include a physical broadcast channel (physical broadcast channel, PBCH), a physical downlink control channel (physical downlink control channel, PDCCH), a physical downlink shared channel (physical downlink shared channel, PDSCH), and the like.

It should be understood that the signals and channels listed above are merely examples for description, and shall not constitute any limitation on this application. This application does not exclude a possibility of defining another signal or channel in a future protocol to implement a same or similar function.

In the following, "an identifier for simultaneously receiving a signal or a channel" and "a state identifier for simultaneously receiving a signal or a channel" are expressed as "an identifier for simultaneous receiving", and "an identifier for simultaneously sending a signal or a channel" and "a state identifier for simultaneously sending a signal or a channel" are expressed as "an identifier for simultaneous sending".

### 4. Time, time point, and duration

The time, the moment, and the duration may be, for example, but are not limited to, a symbol, a frame, a subframe, a half-frame, a system frame, a slot slot, a mini-slot, a radio frame, or a transmission time interval (Transmission time interval, TTI). This is not limited in this embodiment of the present invention.

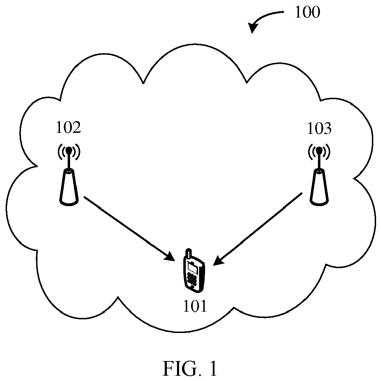

For ease of understanding of embodiments of this application, the following describes in detail a communication system to which a signal transmission method according to an embodiment of this application is applicable by using a **communication system shown in** **FIG. 1** as an example. FIG. 1 is a schematic diagram of the communication system 100 to which the signal transmission method according to this embodiment of this application is applicable. As shown in FIG. 1, the communication system 100 may include at least one terminal device. For example, a terminal device 101 shown in FIG. 1, or may be a chip disposed in the terminal device. The communication system 100 may further include at least one network device, for example, a network device #1 102 or a network device #2 103 shown in FIG. 1, or may be a chip disposed in the network device.

Optionally, the communication system 100 may include one or more network devices such as the network device #1 102 and the network device #2 103 that are shown in the FIG. 1. The network device #1 102 and the network device #2 103 may be network devices in a same cell, or may be network devices in different cells. This is not limited in this application. FIG. 1 is merely an example, and shows an example in which the network device #1 102 and the network device #2 103 are located in a same cell.

Without loss of generality, the following uses an interaction process between the terminal device and the network device as an example to describe in detail the signal transmission method provided in this embodiment of this application.

**Currently,** to meet wide-area coverage, a terminal device may be configured with a plurality of antenna panels (antenna panel). The antenna panels are mainly managed and controlled by a network device through signaling delivery. However, use of the antenna panels are restricted by a plurality of aspects such as power consumption, heat dissipation, a latency, and a hardware processing capability of the terminal. Because the network device does not sense statuses of the antenna panels of the terminal device, when statuses of the antenna panels scheduled by the network device are inconsistent with those of the terminal device, an interworking problem of the statuses of the antenna panels occurs. Therefore, interworking and interconnection for antenna panel control and management is an urgent problem to be resolved.

In view of this, this application provides a signal transmission method, to better coordinate antenna panel management and control between a network device and a terminal device, and implement interworking and interconnection of antenna panel operation and status management and control, thereby improving transmission performance of a system.

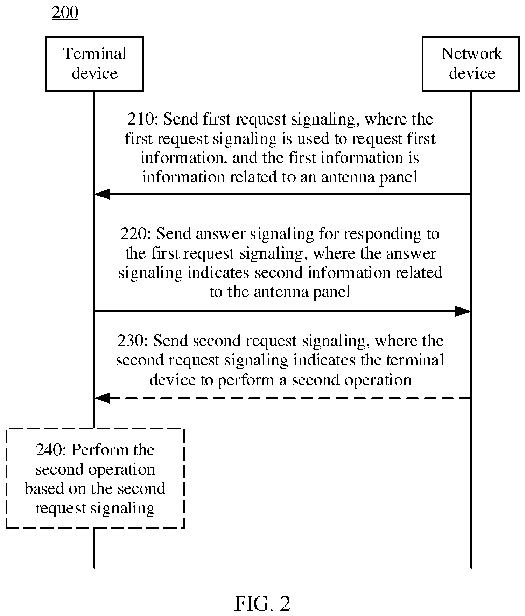

With reference to FIG. 2 to FIG. 5, the following describes a signal transmission method provided in an embodiment of this application. It should be noted that the signal transmission method provided in this application may be applied to a wireless communication system such as the communication system 100 shown in FIG. 1. There may be a wireless communication connection relationship between communication apparatuses in the communication system. For example, as shown in FIG. 1, the terminal device 101 may separately have a wireless communication connection relationship with the network device #1 102 and the network device #2 103. This is not limited in this application.

FIG. 2 is a schematic flowchart of the signal transmission method 200 according to this embodiment of this application from a perspective of device interaction. As shown in FIG. 2, the method 200 shown in FIG. 2 may include step 210 to step 220. Optionally, the method 200 further includes step 230 and step 240. The following describes in detail each step in the method 200 with reference to the accompanying drawings.

Step 210: A terminal device receives first request signaling, where the first request signaling is used to request first information, and the first information is information related to an antenna panel. Correspondingly, a network device sends the first request signaling to the terminal device, where the first request signaling is used to request the first information, and the first information is the information related to the antenna panel.

Optionally, existing signaling may be reused as the first request signaling to request to obtain the information about the antenna panel. For example, but not limited to, the first request signaling may be carried in one or more of a radio resource control (radio resource control, RRC) message, a media access control element (Media access control element, MAC-CE), and downlink control signaling (Downlink control information, DCI). The information about the antenna panel is requested by reusing existing signaling, so that signaling overheads can be reduced.

It should be understood that the RRC message, the MAC-CE, and the DCI are merely examples for ease of understanding, and should not constitute any limitation on this application. This application does not exclude a possibility of carrying the first request signaling in other signaling, or a possibility of defining the foregoing signaling with another name. In other words, the request signaling may be carried in one or more of physical layer signaling and higher layer signaling. This is not limited in this application.

Optionally, the first request signaling may be new signaling, and the new signaling may be used to request the information about the antenna panel.

Step 220: The terminal device sends answer signaling for responding to the first request signaling, where the answer signaling indicates second information related to the antenna panel. Correspondingly, the network device receives the answer signaling for responding to the first request signaling, where the answer signaling indicates second information related to the antenna panel.

Optionally, the first information or the second information includes at least one of the following: a panel index, a panel group index, an activated state of a panel or a panel group, a deactivated state of a panel or a panel group, identifiers of a plurality of panels that simultaneously receive a signal or a channel, state identifiers of the plurality of panels that simultaneously receive a signal or a channel, identifiers of a plurality of panels that simultaneously send a signal or a channel, state identifiers of the plurality of panels that simultaneously send a signal or a channel, identifiers of one or more panel groups that simultaneously receive a signal or a channel, state identifiers of the one or more panel groups that simultaneously receive a signal or a channel, identifiers of one or more panel groups that simultaneously send a signal or a channel, state identifiers of the one or more panel groups that simultaneously send a signal or a channel, a latency of switching between panels and/or panel groups, a panel status mode, a panel status mode index, panel activation duration, a panel activation periodicity, a start/end time point of panel activation, a panel activation time percentage, and a panel activation time offset.

It may be understood that the first information or the second information may be current information, future information, predicted information, or estimated information. For example, a deactivated state of a panel or a panel group is predicted, and a panel activation periodicity is predicted. This is not limited in embodiments of this application. For details, refer to content of the first information or the second information.

Optionally, the first information is current status information of the antenna panel and/or status information of the antenna panel at a target time.

**In a possible implementation, the first information is the current status information of the antenna panel.** In other words, the network device requests the current status information of the antenna panel based on the first request signaling. For example, the terminal device includes three antenna panels panel. Current possible status information of the antenna panel is shown in Table 1.

**Table 1**

| Panel group | Activated state | Indicator for simultaneous sending | Indicator for simultaneous receiving | Latency |
|---|---|---|---|---|
| 1 | Yes/No | - | - | xx ms |
| 2 | Yes/No | - | - | xx ms |
| 3 | Yes/No | - | - | xx ms |
| (1, 2) | Yes/No | Yes/No | Yes/No | xx ms |
| (1, 3) | Yes/No | Yes/No | Yes/No | xx ms |
| (2, 3) | Yes/No | Yes/No | Yes/No | xx ms |
| (1, 2, 3) | Yes/No | Yes/No | Yes/No | xx ms |

It may be understood that Table 1 is merely an example for ease of description. Table 1 may be supplemented based on the first information or the second information, to form any possible combination form. This is not limited in embodiments of this application.

In Table 1, the panel group may include one or more panels. This is not limited in embodiments of this application.

In Table 1, the activated state may be understood as a currently powered-on panel. The activated state may also be understood as that only an activated panel can be used to receive and send data, and a deactivated panel cannot receive and send data. In contrast, the deactivated state may indicate a powered-off panel. Switching between panels in the activated state takes microseconds, and switching between panels in the deactivated state takes milliseconds. To complete panel switching, the panel should be activated or powered-on.

In Table 1, the indicator for simultaneous sending and indicator for simultaneous receiving are described in detail in the foregoing term explanation part. Details are not described herein again.

In the foregoing Table 1, the **latency may be,** for example, but is not limited to, a **latency of switching** between panels, may be a latency of switching between a panel and a panel group, may be a latency of switching between a panel group and a panel group, may be a latency for switching from a single panel to a plurality of panels for simultaneous receiving or simultaneous sending, or may be a latency of switching between a plurality of panels for simultaneous receiving or simultaneous sending. The latency is denoted as xx ms.

For example, the terminal device includes three panels panels, which are respectively denoted as a panel #1, a panel #2, and a panel #3. The panel groups are denoted as panel #(1, 2), panel #(1, 3), panel #(2, 3), and panel #(1, 2, 3).

In a possible implementation, the latency is a time period used for switching between single panels. For example, a latency generated by switching from the panel #1 to the panel #2, or a latency generated by switching from the panel #3 to the panel #1 is a latency of switching.

In another possible implementation, the latency is a time period used for switching between panel groups. For example, a latency generated by switching from the panel #(1, 2) to the panel #(2, 3), or a latency generated by switching from the panel #(1, 3) to the panel #(1, 2) is a latency of switching.

In another possible implementation, the latency is a time period used for switching from a single panel to a panel group. For example, a latency generated by switching from the panel #1 to the panel #(1, 2), or a latency generated by switching from the panel #2 to the panel #(1, 3) is a latency of switching.

In another possible implementation, the latency is a time period used for switching from a panel group to a single panel, for example, a latency of switching generated by switching from the panel #(1, 3) to the panel #1, or a latency of switching generated by switching from the panel #(1, 2, 3) to the panel #2.

In another possible implementation, the latency is a latency for switching from a single panel to a plurality of panels for simultaneous receiving or simultaneous sending, for example, a time period used for switching from the panel #1 to the panel #1 and the panel #3 for simultaneously receiving a signal or a channel, or a time period used for switching from the panel #1 to the panel #1 and the panel #3 for simultaneously sending a signal or a channel.

In another possible implementation, the latency is a time period used for switching between a plurality of panels for simultaneous receiving or simultaneous sending, for example, a time period used for switching from the panel #1 and the panel #3 for simultaneous receiving or simultaneous sending to the panel #2 and the panel #3 for simultaneous receiving or simultaneous sending.

In Table 1, the **latency may be,** for example, but is not limited to, a latency for switching a single panel from a deactivated state to an activated state, or a latency for switching a single panel from an activated state to a deactivated state, and is denoted as an **activation latency.** In this case, the activation latency is xx ms.

For example, the terminal device includes three panels panels, which are respectively denoted as a panel #1, a panel #2, and a panel #3.

In a possible implementation, the latency is a time period for switching a panel from a deactivated state to an activated state. For example, the panel #1 switches from a deactivated state in a slot slot 1 to an activated state in a slot slot 2.

In a possible implementation, the latency is a time period for switching a panel from an activated state to a deactivated state. For example, the panel #1 switches from an activated state in a slot slot 2 to a deactivated state in a slot slot 3.

It may be understood that request signaling sent by the network device to the terminal device may request to obtain all content shown in Table 1, or may request to obtain some content in Table 1 based on a panel index or a panel group index and an actual requirement. Correspondingly, when the terminal device sends answer signaling to the network device, the answer signaling may include all content shown in Table 1, or may also include part of content shown in Table 1 according to a capability of the terminal device. This is not limited in embodiments of this application.

**In another possible implementation, the first information is status information of an antenna panel at a target time.** To be specific, the network device requests the status information of the antenna panel at the target time based on the first request signaling.

The target time may be a next moment, a next time period, a future moment, a future time period, a predicted time period, or a predicted moment. The target time is not limited in embodiments of this application.

It may be understood that a status of the antenna panel may be predicted at the target time via the terminal device or via the network device. In addition, there may be another different prediction form. This is not limited in embodiments of this application.

For example, the terminal device includes three panels panel. Possible status information of the antenna panel at the target time is shown in Table 2 and Table 3.

It may be understood that Table 2 and Table 3 are merely examples for ease of description, and do not cover all status information of the antenna panel at the target time. Table 2 and Table 3 may be supplemented based on the first information or the second information, to form any possible combination form. This is not limited in embodiments of this application.

**Table 2**

| Panel group | Indicator for simultaneous sending | Indicator for simultaneous receiving | Latency | Status mode index | Candidate value index |
|---|---|---|---|---|---|
| 1 | - | - | xx ms | Mode 1 | 1 |
| 2 | - | - | xx ms | Mode 1 | 2 |
| 3 | - | - | xx ms | Mode 2 | 1 |
| (1,2) | Yes/No | Yes/No | xx ms | Mode 2 | 2 |
| (1, 3) | Yes/No | Yes/No | xx ms | Mode 3 | 1 |
| (2, 3) | Yes/No | Yes/No | xx ms | Mode 3 | 2 |
| (1, 2, 3) | Yes/No | Yes/No | xx ms | Mode 4 | 1 |

**Table 3**

| Panel group | Indicator for simultaneous sending | Indicator for simultaneous receiving | Latency | Status mode + candidate value index |
|---|---|---|---|---|
| 1 | - | - | xx ms | 1 (mode 1 + candidate value 1) |
| 2 | - | - | xx ms | 2 (mode 1 + candidate value 2) |
| 3 | - | - | xx ms | 3 (mode 2 + candidate value 1) |
| (1,2) | Yes/No | Yes/No | xx ms | 4 (mode 2 + candidate value 2) |
| (1, 3) | Yes/No | Yes/No | xx ms | 5 (mode 3 + candidate value 1) |
| (2, 3) | Yes/No | Yes/No | xx ms | 6 (mode 3 + candidate value 2) |
| (1, 2, 3) | Yes/No | Yes/No | xx ms | 7 (mode 4 + candidate value 1) |

In Table 2 and Table 3, the identifier for simultaneous sending, the identifier for simultaneous receiving, and the latency are described in detail in related parts in Table 1, and details are not described herein again.

It may be understood that, in Table 2, within the target time, a corresponding state mode index is obtained based on a panel index or a panel group index. A corresponding candidate value index is obtained based on the state mode index. For example, a panel group index 1 corresponds to a mode 1, and a selected candidate value index in the mode 1 is 1; and a panel group index 2 corresponds to the mode 1, and a selected candidate value index in the mode 1 is 2.

It can be understood that, in Table 3, the state mode and the candidate value index are combined within the target time, and an index value is assigned and denoted as a joint index. A corresponding candidate value index is obtained based on the joint index. For example, if a joint index corresponding to the panel group index 1 is 1, the mode 1 and a candidate value 1 are obtained based on the joint index 1; and if a joint index corresponding to the panel group index 2 is 2, the mode 1 and a candidate value 2 are obtained based on the joint index 2. It may be understood that, within the target time, state information of a panel is obtained based on a state mode index corresponding to the panel index or the panel group index, or a state mode and a candidate value are directly obtained based on the panel index or the panel group index. The state mode may include four different modes, which are respectively denoted as a mode 1 to a mode 4. The following describes in detail the mode 1 to the mode 4.

### Model 1

The mode 1 indicates panel status information within duration, and specifically, panel status information within duration starting from a start moment or a start time offset. The duration is n slots, where n is a positive integer, and n may be one slot, two slots, four slots, eight slots, 16 slots, 32 slots, 64 slots, 128 slots, 256 slots, 512 slots, or 1024 slots; the duration is m milliseconds, where m is a positive integer, and m may be 1 ms, 2 ms, 5 ms, 10 ms, 20 ms, 50 ms, 100 ms, 200 ms, 500 ms, 1000 ms, 5000 ms or 10000 ms; or the duration is z minutes, where z may be 1 minute, 5 minutes, 10 minutes, 30 minutes, or 60 minutes. In this embodiment of this application, the start moment and the duration may be determined based on any one or more of the following: predefinition, network configuration, and terminal capability reporting. The duration may also be duration.

The following describes in detail an example in which the duration is one slot. The start moment is predefined as a first symbol of the slot 1, and the duration is one slot. It may be understood that the duration in this embodiment of this application may be infinite. The foregoing one slot is merely an example. This is not limited in this application.

### Model 2

The mode 2 indicates panel status information of a period, and specifically, panel status information within a specific period starting from a start moment or a start time offset. The period T is n slots, where n is a positive integer, and n may be one slot, two slots, four slots, eight slots, 16 slots, 32 slots, 64 slots, 128 slots, 256 slots, 512 slots, or 1024 slots; the period T is m milliseconds, where m is a positive integer, and m may be 1 ms, 2 ms, 5 ms, 10 ms, 20 ms, 50 ms, 100 ms, 200 ms, 500 ms, 1000 ms, 5000 ms or 10000 ms; or the period T is z minutes, where z may be 1 minute, 5 minutes, 10 minutes, 30 minutes, or 60 minutes. In this embodiment of this application, the period, the start moment and the duration may be determined based on any one or more of the following: predefinition, network configuration, and terminal capability reporting. In this embodiment of this application, the duration may also be duration.

In a possible implementation, duration of the mode 1 may be reused based on different periods T. The following describes in detail an example in which the period T is 10 slots. In the 10 slots, it is assumed that the start moment is a first symbol of a slot 1, and the duration may be one slot, two slots, or four slots. It may be understood that the period in this embodiment of this application may be infinite. That the period T is 10 slots is merely an example. This is not limited in embodiments of this application. The one slot, the two slots, or the four slots are merely examples, and may also be implemented in another different manner. This is not limited in this application.

In another possible implementation, a time percentage is defined in the period T. The time percentage may be 5%, 10%, 20%, 30%, 40%, 50%, 60%, 70%, 80%, 90%, 95% or 100%. The following describes in detail an example in which the period T is 10 ms and the time percentage is 5%. When T is 10 ms and the time percentage is 5%, the duration is 0.5 ms. It may be understood that the period T of 10 ms and the time percentage of 5% are merely examples. This is not limited in embodiments of this application. **Model 3**

The mode 3 indicates panel state information within a time window, and specifically panel state information within duration starting from a start time offset or a start moment of a specific period in the time window. A length of the time window may be 10 slots, 20 slots, 30 slots, 4 slots, 50 slots, 60 slots, 70 slots, 80 slots, 90 slots, 100 slots, 160 slots, 320 slots, 640 slots, 1280 slots, 2560 slots, 5120 slots, or 10240 slots. Alternatively, a length of the time window may be m milliseconds, where m is a positive integer, and m may be 10 ms, 20 ms, 50 ms, 100 ms, 200 ms, 500 ms, 1000 ms, 2000 ms, 5000 ms, 10000 ms, 50000 ms or 100000 ms. Alternatively, a length of the time window may be z minutes, where z may be 10 minutes, 50 minutes, 100 minutes, 300 minutes, or 600 minutes. In this embodiment of this application, the time window, the period, the start moment and the duration may be determined based on any one or more of the following: predefinition, network configuration, and terminal capability reporting. In this embodiment of this application, the duration may also be duration.

The following describes in detail an example in which the time window M is predefined as 30 slots. In the 30 slots, a period T1 is defined as 10 slots, and a period T2 is defined as 20 slots. In T1, it is assumed that a start moment is a first symbol of a slot 1, and duration may be one slot, three slots, or five slots. In T2, it is assumed that a start moment is a first symbol of a slot 10, and duration may be two slots, four slots, or six slots. It may be understood that the time window in this embodiment of this application may be infinite. That the time window M is 30 slots is merely an example. This is not limited in embodiments of this application. The foregoing T1 and T2 are merely examples, and are not limited in embodiments of this application.

### Mode 4

The mode 4 indicates panel state information within a time window, and specifically, different from the mode 3, panel state information within duration starting from a start time offset or a start moment within a time percentage defined within the time window. The time percentage may be 5%, 10%, 20%, 30%, 40%, 50%, 60%, 70%, 80%, 90%, 95% or 100%. The time window, the time percentage, the start moment and the duration may be determined based on any one or more of the following: predefinition, network configuration, and terminal capability reporting. In this embodiment of this application, the duration may also be duration. The length of the time window defined in the mode 3 may be reused as the time window. The duration of the mode 1 may be reused as the duration.

The following describes in detail that a length of the time window is 50 slots and the time percentage is 10%, 20%, or 40%. It is assumed that the start moment is a first symbol of a slot 1, and the duration is five slots, 10 slots, or 20 slots based on the time percentage. Optionally, the time window M is predefined as 50 slots. In the 50 slots, a period T1 is defined as 20 slots, and a period T2 is defined as 30 slots. Within T1, the time percentage is defined as 10%, 20%, or 40%. It is assumed that the start moment is a first symbol of a slot 1, and the duration is two slots, four slots, or eight slots based on the time percentage. Within T2, the time percentage is defined as 10%, 20%, or 40%. It is assumed that the start moment is a first symbol of a slot 2, and the duration is three slots, six slots, or 12 slots based on the time percentage.

It may be understood that the time window in this embodiment of this application may be infinite. That the time window M is 50 slots is merely an example. This is not limited in embodiments of this application. The foregoing T1 and T2 are merely examples, and are not limited in embodiments of this application.

Optionally, a start moment in the mode 1 to the mode 4 may start from receiving DCI that triggers a panel state, or start from 3 ms after receiving a MAC CE that triggers a panel state, or an effective time is indicated by a field in signaling.

It may be understood that the mode 1 to the mode 4 may have different combination forms, and different state modes may be formed after combination. For example, the mode 2 + the mode 3 are used, that is, the status information of the panel is indicated in the mode 2 within a period of time, and the status information of the panel is indicated in the mode 3 within another period of time. Alternatively, a combination of mode 2 + mode 4 may be used, a combination of mode 2 + mode 3 + mode 4 may be used, or a combination of mode 1 + mode 2 + mode 1 may be used. This is not limited in embodiments of this application. Any combination based on the mode 1 to the mode 4 falls within the protection scope of this embodiment of this application.

**In another possible implementation, the first information is current status information of the antenna panel and status information of at a target time.** In other words, the network device requests the current status information of the antenna panel and the status information at the target time based on the first request signaling. To be specific, based on Table 1 and Table 2, in addition to requesting the current status information of the antenna panel, the first request signaling further requests the status information of the antenna panel at the target time. The terminal device reports, in answer signaling, current status information of the antenna panel, and reports status information at the target moment based on the status information at the target moment.

Optionally, the answer signaling for the first request signaling includes acknowledgment information or negative acknowledgment information.

In the answer signaling, one bit may indicate the acknowledgment information and/or the negative acknowledgment information included in the answer signaling. For example, one bit has two states: 0 and 1. When the bit is 0, the bit may indicate acknowledgment information. When the bit is 1, the bit may indicate negative acknowledgment information. Alternatively, when the bit is 1, the bit indicates the acknowledgment information; or when the bit is 0, the bit may indicate the negative acknowledgment information. The foregoing indication manner of the acknowledgment information and/or the negative acknowledgment information is merely an example. There may be different indication manners in different cases. This is not limited in embodiments of this application.

Optionally, the first information is **the same as** the second information. For example, when the answer signaling for the first request signaling includes the acknowledgment information, that is, the antenna panel of the terminal device meets the first information requested by the first request signaling, and the acknowledgment information is sent. In this case, the first information is the same as the second information.

Optionally, the first information is **different from** the second information. For example, when the answer signaling for the first request signaling includes the negative acknowledgment information, that is, the antenna panel of the terminal device cannot meet the first information requested by the first request signaling, and the negative acknowledgment information is sent. The negative acknowledgment information may carry the second information supported by the current antenna panel. In this case, the first information is different from the second information. When the first information is different from the second information, there may be different implementations, for example, an implementation 1 to an implementation 3.

### Implementation 1

In a possible implementation, **the first information may be a subset of the second information.** For example, the first information is an identifier for simultaneous receiving, and the second information is an identifier for simultaneous receiving and a panel status mode index. In other words, the first request signaling requests the identifier for simultaneous receiving. In this case, the antenna panel can report the identifier for simultaneous receiving, and can also report the panel state mode index. Therefore, the identifier for simultaneous receiving and the panel state mode index are reported in the answer signaling.

### Implementation 2

In another possible implementation, **the second information may be a subset of the first information.** For example, the first information is an identifier for simultaneous receiving and a panel status mode index, and the second information is an identifier for simultaneous receiving. In other words, the first request signaling requests the identifier for simultaneous receiving and the panel state mode index. In this case, the antenna panel can only support reporting the identifier for simultaneous receiving. Therefore, only the identifier for simultaneous receiving is reported in the answer signaling.

### Implementation 3

In another possible implementation, **the first information and the second information do not overlap.** For example, the first information is an identifier for simultaneous receiving, and the second information is a panel status mode index. In other words, the first request signaling requests the identifier for simultaneous receiving. In this case, the antenna panel does not support reporting the identifier for simultaneous receiving, and only supports reporting the panel state mode index. Therefore, the panel state mode index is reported in the answer signaling.

Optionally, the answer signaling further includes the second information.

It may be understood that the acknowledgment information or the negative acknowledgment information and the second information that are sent by the terminal device may be sent in same signaling, or may be sent in different signaling. This is not limited in embodiments of this application.

Step 230: The terminal device receives second request signaling, where the second request signaling indicates the terminal device to perform a related operation. Correspondingly, the network device sends the second request signaling, where the second request signaling indicates the terminal device to perform the related operation.

Optionally, existing signaling may be reused as the second request signaling to request to obtain information about the antenna panel, or the second request signaling may be new signaling, and the new signaling may be used to request the information about the antenna panel. For a specific implementation, refer to step 210. Details are not described herein again.

Step 240: The terminal device performs a second operation based on the second request signaling.

Optionally, the terminal device performs the related operation based on the second request signaling. The related operation includes at least one of the following: panel activation, panel deactivation, panel measurement, panel measurement result reporting, panel switching, panel status reporting, and panel transmission.

It can be learned that in the method shown in FIG. 2, the network device requests a panel status based on request signaling, and the terminal device reports status information to the network device based on current panel status or panel status at a target time. This can better coordinate antenna panel management and control between the network device and the terminal device, and implement interworking and interconnection of antenna panel status management and control, thereby improving transmission performance of a system.

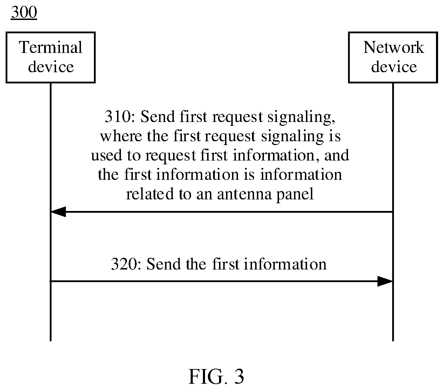

In the embodiment shown in FIG. 2, the network device sends the first request signaling, and the terminal device sends the answer signaling for responding to the first request signaling. According to this answer mechanism, interworking and interconnection of antenna panel status management and control are implemented. In the following embodiment shown in FIG. 3, a terminal device may report, based on request signaling sent by a network device, information requested by the network device, or the network device may not send first request signaling, and the terminal device proactively reports information related to an antenna panel.

**FIG. 3** is a schematic flowchart of a signal transmission method 300 according to an embodiment of this application from a perspective of device interaction. As shown in FIG. 3, the method 300 shown in FIG. 3 may include step 310 to step 320. The following describes the steps in the method 300 in detail with reference to the accompanying drawings.

Step 310: A terminal device receives first request signaling, where the first request signaling is used to request first information, and the first information is information related to an antenna panel. Correspondingly, a network device sends the first request signaling to the terminal device, where the first request signaling is used to request the first information, and the first information is the information related to the antenna panel.

Optionally, the first information includes at least one of the following: a panel index, a panel group index, an activated state of a panel or a panel group, a deactivated state of a panel or a panel group, identifiers of a plurality of panels that simultaneously receive a signal or a channel, state identifiers of the plurality of panels that simultaneously receive a signal or a channel, identifiers of a plurality of panels that simultaneously send a signal or a channel, state identifiers of the plurality of panels that simultaneously send a signal or a channel, identifiers of one or more panel groups that simultaneously receive a signal or a channel, state identifiers of the one or more panel groups that simultaneously receive a signal or a channel, identifiers of one or more panel groups that simultaneously send a signal or a channel, state identifiers of the one or more panel groups that simultaneously send a signal or a channel, a latency of switching between panels and/or panel groups, a panel status mode, a panel status mode index, panel activation duration, a panel activation periodicity, a start/end time point of panel activation, a panel activation time percentage, and a panel activation time offset.

Optionally, the terminal device receives configuration information, and the network device sends the configuration information. The configuration information is status information of the antenna panel. The configuration information is information of the antenna panel periodically configured by the network device for the terminal device.

Step 320: The terminal device sends the first information to the network device, where the first information is the information related to the antenna panel.

It may be understood that in the method shown in FIG. 3, step 310 may be optional. In this case, step 320 is as follows: The terminal device sends the first information to the network device, where the first information is the status information of the antenna panel reported by the terminal device to the network device. In other words, in this case, without the first request signaling, the terminal device proactively reports current status information of the antenna panel and/or status information of the antenna panel at a target time to the network device.

Optionally, the terminal device reports the status information of the antenna panel to the network device in a periodic mode, in a non-periodic mode, in a semi-persistent mode, or in an event-triggered mode. This is not limited in embodiments of this application.

For example, reporting is performed in a periodic mode, and a status of the antenna panel is defined in a period. The following describes an example in which a panel is in an activated state, and two panels are used, and are respectively denoted as a panel #1 and a panel #2. In a period T1, the panel #1 is in the activated state, and the panel #2 is in a deactivated state. In a period T2, the panel #1 is in the deactivated state, and the panel #2 is in the activated state.

It can be learned that, in the method shown in FIG. 3, the first information can include a plurality of different types of antenna panel information, to greatly increase diversity of the first information. On one hand, the network device may request to obtain more information about the antenna panel based on the first request signaling, so that the network device and the terminal device can better manage and control the antenna panel, thereby improving transmission performance of a system. On the other hand, the network device may not send the first request signaling, and the terminal device proactively reports and sends the first information, thereby greatly reducing signaling overheads.

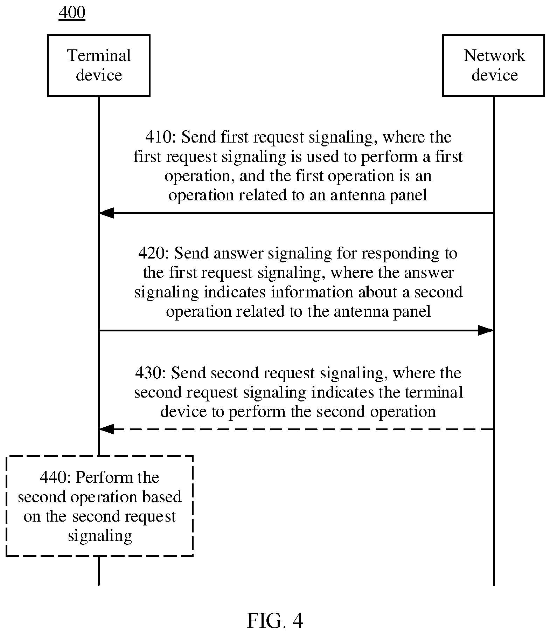

**FIG. 4** is a schematic flowchart of a signal transmission method 400 according to an embodiment of this application from a perspective of device interaction. As shown in FIG. 4, the method 400 shown in FIG. 4 may include step 410 to step 420. Optionally, the method 400 further includes step 430 and step 440. The following describes in detail each step in the method 400 with reference to the accompanying drawings.

Step 410: A terminal device receives first request signaling, where the first request signaling is used to perform a first operation, and the first operation is an operation related to an antenna panel. Correspondingly, a network device sends the first request signaling to the terminal device, where the first request signaling is used to perform the first operation, and the first operation is the operation related to the antenna panel.

Optionally, existing signaling may be reused as the first request signaling to request to perform the first operation, or the first request signaling may be new signaling, and the new signaling may be used to request to perform the first operation. For a specific implementation of signaling, refer to step 210. Details are not described herein again.

Step 420: The terminal device sends answer signaling for responding to the first request signaling, where the answer signaling indicates information about a second operation related to the antenna panel. Correspondingly, the network device receives the answer signaling for responding to the first request signaling, where the answer signaling indicates the information about the second operation related to the antenna panel.

Optionally, the first operation or the second operation includes, for example, but is not limited to, at least one of the following: panel activation, panel deactivation, panel measurement, panel measurement result reporting, panel switching, panel status reporting, and panel transmission.

Optionally, the first operation or the second operation includes, for example, but is not limited to, at least one of the following: panel group activation, panel group deactivation, panel group measurement, panel group measurement result reporting, panel group switching, panel group status reporting, and panel group transmission.

Optionally, the first operation or the second operation requested by the first request signaling may be a predicted panel operation, for example, one or more of the following: predicted panel activation, predicted panel deactivation, predicted panel measurement, predicted panel measurement result reporting, predicted panel switching, predicted panel status reporting, predicted panel group activation, predicted panel group deactivation, predicted panel group measurement, predicted panel group measurement result reporting, predicted panel group switching, and predicted panel group status reporting. Optionally, the first operation requested by the first request signaling may be: requesting to operate the current antenna panel, and/or requesting to operate the antenna panel at a target time. Correspondingly, the information that is about the second operation related to the antenna panel and that is indicated by the answer signaling may be current operation information of the antenna panel and/or operation information at the target time of the antenna panel.

For example, when the first request signaling requests to operate the current antenna panel, the second operation information is current operation information of the antenna panel. In this case, for the information about the second operation, refer to Table 1 in step 220. When the first request signaling requests to operate the antenna panel at the target time, the information about the second operation is operation information of the antenna panel at the target time. Refer to Table 2 in step 220. When the first request signaling requests to operate the current antenna panel and the antenna panel at the target time, the information about the second operation is operation information of the current antenna panel and operation information at the target time. Refer to any combination of Table 1 and Table 2 in step 220.

It may be understood that, within the target time, a first operation of a panel is performed based on a state mode index corresponding to a panel index or a panel group index, or a state mode of the panel directly obtained based on the panel index or the panel group index. The state mode index may include four different modes, which are respectively denoted as a mode 5 to a mode 8. The mode 5 to the mode 8 respectively correspond to the foregoing mode 1 to mode 4. The difference is that the "status information" is replaced with the "first operation".

The following describes an example in which the mode 5 and the first operation are panel activation. The mode 5 indicates panel activation within duration, and specifically, panel activation within duration starting from a start moment. The start moment and the duration may be determined based on any one or more of the following: predefinition, network configuration, and terminal capability reporting. In this embodiment of this application, the duration may also be duration. For example, the start moment is predefined as a first symbol of a slot 1, the duration may be two slots, four slots, eight slots, 16 slots, or the like, and the panel may be activated in the two slots, the four slots, the eight slots, or the 16 slots. It may be understood that the duration in this embodiment of this application may be infinite. The two slots, the four slots, the eight slots, or the 16 slots are merely examples. This is not limited in this application.

Optionally, in addition to the mode 5 to the mode 8 corresponding to the mode 1 to the mode 4, there may be a mode 9. The mode 9 defines a start moment of antenna panel activation.

It may be understood that the mode 5 to the mode 8 may have different combination forms, and different state modes may be formed after combination. For example, the mode 5 + mode 6 is used, that is, the first operation is indicated in the mode 5 within a period of time, and the first operation is indicated in the mode 6 within another period of time. Alternatively, a combination of mode 5 + mode 7 may be used, a combination of mode 6 + mode 7 + mode 8 may be used, or a combination of mode 5 + mode 6 + mode 5 may be used. This is not limited in embodiments of this application. Any combination based on the mode 5 to the mode 8 falls within the protection scope of this embodiment of this application.

It should be noted that, in some cases, panel activation and panel switching are collectively referred to as panel switching, and a latency of panel activation and a latency of panel switching are denoted as a latency of panel switching. This application does not exclude such understanding. For ease of understanding, in the following embodiments, panel activation and panel switching are referred to as two separate concepts. This shall not constitute any limitation on this application.

Optionally, the answer signaling for the first request signaling includes acknowledgment information or negative acknowledgment information.

In the answer signaling, one bit may indicate the acknowledgment information and/or the negative acknowledgment information included in the answer signaling. For example, one bit has two states: 0 and 1. When the bit is 0, the bit may indicate acknowledgment information. When the bit is 1, the bit may indicate negative acknowledgment information. Alternatively, when the bit is 1, the bit indicates the acknowledgment information; or when the bit is 0, the bit indicates the negative acknowledgment information. The foregoing indication manner of the acknowledgment information and/or the negative acknowledgment information is merely an example. There may be different indication manners in different cases. This is not limited in embodiments of this application.

In a possible implementation, the negative acknowledgment information may carry the information about the second operation supported by the current antenna panel.

In another possible implementation, the negative acknowledgment information carries status information of the antenna panel of the terminal device within the target time.

In another possible implementation, latency information M is carried in the negative acknowledgment information, to notify the network device that the action can be performed after M.

Optionally, the answer signaling further includes the information about the second operation.

It may be understood that the acknowledgment information or the negative acknowledgment information and the information about the second operation that are sent by the terminal device may be sent in same signaling, or may be sent in different signaling. This is not limited in embodiments of this application.

Optionally, the information about the second operation includes at least one of the following: a panel index, a panel group index, an activated state of a panel or a panel group, a deactivated state of a panel or a panel group, identifiers of a plurality of panels that simultaneously receive a signal or a channel, state identifiers of the plurality of panels that simultaneously receive a signal or a channel, identifiers of a plurality of panels that simultaneously send a signal or a channel, state identifiers of the plurality of panels that simultaneously send a signal or a channel, identifiers of one or more panel groups that simultaneously receive a signal or a channel, state identifiers of the one or more panel groups that simultaneously receive a signal or a channel, identifiers of one or more panel groups that simultaneously send a signal or a channel, state identifiers of the one or more panel groups that simultaneously send a signal or a channel, a latency of switching between panels and/or panel groups, a panel status mode, a panel status mode index, panel activation duration, a panel activation periodicity, a start/end time point of panel activation, a panel activation time percentage, and a panel activation time offset.

Optionally, the first operation is the same as the second operation. For example, when the answer signaling for the first request signaling includes the acknowledgment information, that is, the antenna panel of the terminal device meets an operation requested by the first request signaling, and the acknowledgment information is sent. In this case, the first operation is the same as the second operation.

Optionally, the first operation is different from the second operation. For example, when the answer signaling for the first request signaling includes the negative acknowledgment information, that is, the antenna panel of the terminal device cannot meet an operation requested by the first request signaling, and the negative acknowledgment information is sent. In this case, the first operation is different from the second operation. When the first operation is different from the second operation, there may be different implementations, which are denoted as an implementation 4 to an implementation 6.

### Implementation 4

In a possible implementation, the first operation may be a subset of the second operation. For example, the first operation is panel activation, and the second operation is panel activation and panel measurement. In other words, the first request signaling requests to perform panel activation. In this case, the antenna panel supports panel activation, and may perform panel switching. Therefore, panel activation information and panel measurement information are reported in the answer signaling.

### Implementation 5

In another possible implementation, the second operation may be a subset of the first operation. For example, the first operation is panel measurement and panel switching, and the second operation is panel switching. In other words, the first request signaling requests to perform panel measurement and panel switching. In this case, the antenna panel can support only panel measurement, and only panel measurement information is reported in the answer signaling.

### Implementation 6

In another possible implementation, the first operation and the second operation do not overlap. For example, the first operation is panel switching, and the second operation is panel measurement. In other words, the first request signaling requests to perform panel switching. In this case, the antenna panel does not support panel switching, and supports only panel measurement. Therefore, panel measurement information is reported in the answer signaling.

Step 430: The terminal device receives second request signaling, where the second request signaling indicates the terminal device to perform the second operation. Correspondingly, the network device sends the second request signaling, where the second request signaling indicates the terminal device to perform the second operation.

Optionally, existing signaling may be reused as the second request signaling to indicate the terminal device to perform the second operation, or the second request signaling may be new signaling, and the new signaling indicates the terminal device to perform the second operation. For a specific implementation, refer to step 210. Details are not described herein again.

Step 440: The terminal device performs the second operation based on the second request signaling.

It can be learned that in the method shown in FIG. 4, the network device requests to perform the first operation based on request signaling, and the terminal device reports status information to the network device based on current panel status or panel status at a target time. This can better coordinate antenna panel management and control between the network device and the terminal device, and implement interworking and interconnection of antenna panel status management and control, thereby improving transmission performance of a system.

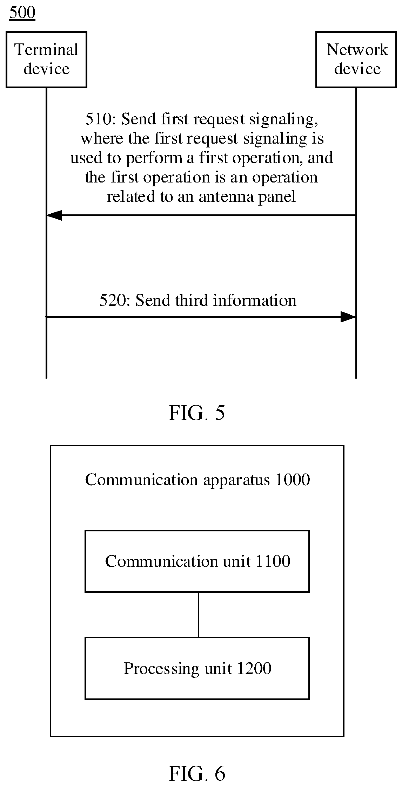

**FIG. 5** is a schematic flowchart of a signal transmission method 500 according to an embodiment of this application from a perspective of device interaction. As shown in FIG. 5, the method 500 shown in FIG. 5 may include step 510 to step 520. The following describes the steps in the method 500 in detail with reference to the accompanying drawings.

Step 510: A terminal device receives first request signaling, where the first request signaling is used to perform a first operation, and the first operation is an operation related to an antenna panel. Correspondingly, a network device sends the first request signaling to the terminal device, where the first request signaling is used to perform the first operation, and the first operation is the operation related to the antenna panel.

Optionally, the first operation includes, for example, but is not limited to, at least one of the following: panel activation, panel deactivation, panel measurement, panel measurement result reporting, panel switching, panel status reporting, and panel transmission.

Optionally, the first operation includes, for example, but is not limited to, at least one of the following: panel group activation, panel group deactivation, panel group measurement, panel group measurement result reporting, panel group switching, panel group status reporting, and panel group transmission.

Step 520: The terminal device sends third information to the network device, where the third information may include identification information. The identification information identifies information related to the antenna panel. For example, the network device requests the terminal device to perform panel measurement reporting. In a possible case, the terminal device meets a panel measurement reporting condition, and the terminal device is identified, based on identification information in the third information, that the terminal device has a panel measurement reporting capability. For example, a bit is set to 1 to identify that the terminal device has the panel measurement reporting capability. In another possible case, the terminal device does not meet a panel measurement reporting condition, and the terminal device is identified, based on identification information in the third information, that the terminal device does not has a panel measurement reporting capability. For example, a bit is set to 0 to identify that the terminal device does not have the panel measurement reporting capability.

It may be understood that the third information may be based on a current measurement report, for example, layer 1 reference signal L1-RSRP received quality and layer 1 signal-to-interference-plus-noise ratio L1-SINR measurement report, and the identification information may be added to identify information related to the antenna panel. The identification information may be a reported abnormal value. This is not limited in embodiments of this application.

It can be learned that in the method shown in FIG. 5, the terminal device executes the first operation by executing the first request signaling, and notifies, by reporting the identification information, the network device of whether the first operation is successfully executed, thereby implementing interworking and interconnection between the terminal device and the network device.

In embodiments provided in this application, the methods provided in embodiments of this application are described from perspectives of the network device, the terminal, and interaction between the network device and the terminal. To implement the functions of the methods provided in embodiments of this application, both the network device and the terminal may include a hardware structure and a software module, to implement the functions in a form of the hardware structure, the software module, or a combination of the hardware structure and the software module. One of the foregoing functions may be performed by using the hardware structure, the software module, or the combination of the hardware structure and the software module.

**FIG. 6** **is a schematic block diagram of a communication apparatus according to an embodiment of this application.** As shown in FIG. 6, the communication apparatus 1000 may include a communication unit 1100 and a processing unit 1200.

In a possible design, the communication apparatus 1000 may correspond to the terminal device in the foregoing method embodiments, for example, may be a terminal device, or may be a chip disposed in the terminal device.

Specifically, the communication apparatus 1000 may correspond to the terminal device in any method in FIG. 2 to FIG. 5 according to embodiments of this application. The communication apparatus 1000 may include units configured to perform the method performed by the terminal device in any method in FIG. 2 to FIG. 5. In addition, the units in the communication apparatus 1000 and the foregoing other operations and/or functions are separately intended to implement corresponding method procedures in any method in FIG. 2 to FIG. 5.

For example, but not limited to, when the communication apparatus 1000 is configured to perform the method in FIG. 4, the communication unit 1100 may be configured to perform step 410, 420, or 430 in the method, and the processing unit 1200 may be configured to perform step 440 in the method.

It should be understood that a specific process in which the units perform the foregoing corresponding steps is described in detail in the foregoing method embodiments. For details, refer to related content in FIG. 2 to FIG. 5. For brevity, details are not described herein again.

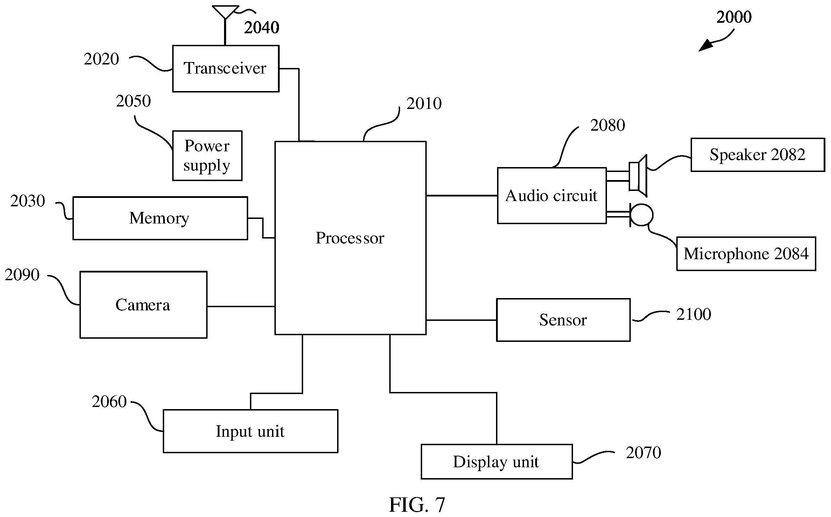

It should be further understood that when the communication apparatus 1000 is the terminal device, the communication unit 1100 in the communication apparatus 1000 may correspond to a transceiver 2020 in a terminal device 2000 shown in FIG. 7. The processing unit 1200 in the communication apparatus 1000 may correspond to a processor 2010 in the terminal device 2000 shown in FIG. 7.

It should be further understood that when the communication apparatus 1000 is a chip disposed in a terminal device, the communication unit 1100 in the communication apparatus 1000 may be an input/output interface.

In another possible design, the communication apparatus 1000 may correspond to the network device in the foregoing method embodiments, for example, may be a network device, or may be a chip disposed in the network device.

Specifically, the communication apparatus 1000 may correspond to the network device in any method in FIG. 2 to FIG. 5 according to embodiments of this application. The communication apparatus 1000 may include units configured to perform the method performed by the network device in any method in FIG. 2 to FIG. 5. In addition, the units in the communication apparatus 1000 and the foregoing other operations and/or functions are separately intended to implement corresponding procedures in any method in FIG. 2 to FIG. 5.

It should be understood that a specific process in which the units perform the foregoing corresponding steps is described in detail in the foregoing method embodiments. For details, refer to related content in FIG. 2 to FIG. 5. For brevity, details are not described herein again.

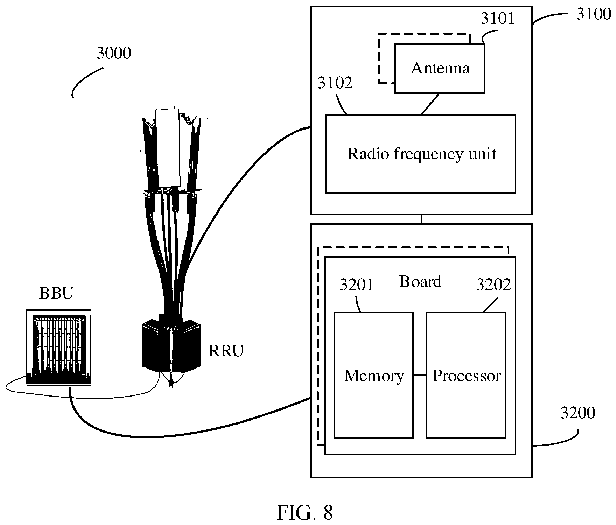

It should be further understood that when the communication apparatus 1000 is the network device, the communication unit 1100 in the communication apparatus 1000 may correspond to a transceiver 3200 in a network device 3000 shown in FIG. 8. The processing unit 1200 in the communication apparatus 1000 may correspond to a processor 3100 in the network device 3000 shown in FIG. 8.

It should be further understood that when the communication apparatus 1000 is a chip disposed in a network device, the communication unit 1100 in the communication apparatus 1000 may be an input/output interface.

FIG. 7 is a schematic diagram of a structure of the terminal device 2000 according to an embodiment of this application. The terminal device 2000 may be used in the system shown in FIG. 1, to perform functions of the terminal device in the foregoing method embodiments.

As shown in the figure, the terminal device 2000 includes the processor 2010 and the transceiver 2020. Optionally, the terminal device 2000 further includes a memory 2030. The processor 2010, the transceiver 2020, and the memory 2030 may communicate with each other through an internal connection path, to transfer a control signal and/or a data signal. The memory 2030 is configured to store a computer program. The processor 2010 is configured to invoke and run the computer program in the memory 2030, to control the transceiver 2020 to receive or send a signal. Optionally, the terminal device 2000 may further include an antenna 2040, configured to send, by using a radio signal, uplink data or uplink control signaling output by the transceiver 2020.

The processor 2010 and the memory 2030 may be integrated into a processing apparatus. The processor 2010 is configured to execute program code stored in the memory 2030, to implement the foregoing functions. During specific implementation, the memory 2030 may also be integrated into the processor 2010, or may be independent of the processor 2010. The processor 2010 may correspond to the processing unit 1200 in FIG. 6.

The transceiver 2020 may correspond to the communication unit 1100 in FIG. 6, and may be alternatively referred to as a transceiver unit. The transceiver 2020 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that, the terminal device 2000 shown in FIG. 7 can implement the processes of the terminal device in any method embodiment shown in FIG. 2 or FIG. 5. The operations and/or the functions of the modules in the terminal device 2000 are separately for implementing corresponding procedures in the foregoing method embodiment. For details, refer to the descriptions in the foregoing method embodiments. To avoid repetition, detailed descriptions are properly omitted herein.

The processor 2010 may be configured to perform an action that is implemented inside the terminal device and that is described in the foregoing method embodiments. The transceiver 2020 may be configured to perform a sending action from the terminal device to the network device or a receiving operation from the network device in the foregoing method embodiments. For details, refer to the descriptions in the foregoing method embodiments. Details are not described herein again.

Optionally, the terminal device 2000 may further include a power supply 2050 configured to supply power to various devices or circuits in the terminal device.

In addition, to improve functions of the terminal device, the terminal device 2000 may further include one or more of an input unit 2060, a display unit 2070, an audio circuit 2080, a camera 2090, a sensor 2100, and the like, and the audio circuit 2080 may further include a speaker 2082, a microphone 2084, and the like.

FIG. 8 is a schematic diagram of a structure of the network device according to an embodiment of this application. For example, FIG. 8 may be a schematic diagram of a structure of a base station. The base station 3000 may be used in the system shown in FIG. 1, and perform functions of the network device in the foregoing method embodiments.

As shown in the figure, the base station 3000 may include one or more radio frequency units, such as a remote radio unit (remote radio unit, RRU) 3100 and one or more baseband units (baseband unit, BBU) (which may also be referred to as digital unit (digital unit, DU)) 3200. The RRU 3100 may be referred to as a transceiver unit, and corresponds to the communication unit 1100 in FIG. 6. Optionally, the transceiver unit 3100 may also be referred to as a transceiver, a transceiver circuit, or the like, and may include at least one antenna 3101 and a radio frequency unit 3102. Optionally, the transceiver unit 3100 may include a receiving unit and a sending unit. The receiving unit may correspond to a receiver (or referred to as a receiver circuit), and the sending unit may correspond to a transmitter (or referred to as a transmitter circuit). The RRU 3100 is mainly configured to send and receive a radio frequency signal, and perform conversion between the radio frequency signal and a baseband signal. For example, the RRU 3100 is configured to send indication information to a terminal device. The BBU 3200 is mainly configured to perform baseband processing, control the base station, and so on. The RRU 3100 and the BBU 3200 may be physically disposed together, or may be physically disposed separately, that is, the base station is a distributed base station.

The BBU 3200 is a control center of the base station, may also be referred to as a processing unit, may correspond to the processing unit 1200 in FIG. 6, and is mainly configured to implement a baseband processing function, for example, channel coding, multiplexing, modulation, or spreading. For example, the BBU (the processing unit) may be configured to control the base station to perform an operation procedure related to the network device in the foregoing method embodiment, for example, to generate the foregoing indication information.

In an example, the BBU 3200 may include one or more boards, and a plurality of boards may jointly support a radio access network (for example, an LTE network) having a single access standard, or may separately support radio access networks (for example, the LTE network, a 5G network, or another network) having different access standards. The BBU 3200 further includes a memory 3201 and a processor 3202. The memory 3201 is configured to store necessary instructions and data. The processor 3202 is configured to control the base station to perform a necessary action, for example, is configured to control the base station to perform the operation procedure related to the network device in the foregoing method embodiment. The memory 3201 and the processor 3202 may serve one or more boards. In other words, a memory and a processor may be disposed on each board. Alternatively, a plurality of boards may share a same memory and a same processor. In addition, a necessary circuit may further be disposed on each board.

It should be understood that, the base station 3000 shown in FIG. 8 can implement the processes of the network device in any method in the method embodiments shown in FIG. 2 or FIG. 5. The operations and/or the functions of the modules in the base station 3000 are separately for implementing corresponding procedures in the foregoing method embodiments. For details, refer to the descriptions in the foregoing method embodiments. To avoid repetition, detailed descriptions are properly omitted herein.

The BBU 3200 may be configured to perform an action that is implemented inside the network device and that is described in the foregoing method embodiments. The RRU 3100 may be configured to perform a sending action from the network device to the terminal device or a receiving operation from the terminal device in the foregoing method embodiments. For details, refer to the descriptions in the foregoing method embodiments. Details are not described herein again.

An embodiment of this application further provides a processing apparatus, including a processor and an interface. The processor is configured to perform the communication methods in the foregoing method embodiments.

It should be understood that the processing apparatus may be a chip. For example, the processing apparatus may be a field programmable gate array (field programmable gate array, FPGA), an application-specific integrated circuit (application-specific integrated circuit, ASIC), a system on chip (system on chip, SoC), a central processing unit (central processor unit, CPU), a network processor (network processor, NP), a digital signal processing circuit (digital signal processor, DSP), a micro controller (micro controller unit, MCU), a programmable logic device (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

Based on the methods provided in embodiments of this application, this application further provides a computer program product. The computer program product includes computer program code. When the computer program code is run on a computer, the computer is enabled to perform the method in any embodiment in FIG. 2 to FIG. 5.

Based on the methods provided in embodiments of this application, this application further provides a computer-readable medium. The computer-readable medium stores program code. When the program code is run on a computer, the computer is enabled to perform the method in any embodiment in FIG. 2 to FIG. 5.

According to the method provided in embodiments of this application, this application further provides a system. The system includes the foregoing one or more terminal devices and the foregoing one or more network devices.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disc (solid state disc, SSD)), or the like.

The network device and the terminal device in the foregoing apparatus embodiments completely correspond to the network device or the terminal device in the method embodiments. A corresponding module or unit performs a corresponding step. For example, the communication unit (the transceiver) performs a receiving or sending step in the method embodiments, and a step other than the sending step and the receiving step may be performed by the processing unit (the processor). For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. The components may communicate by using a local and/or remote process and according to, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In the foregoing embodiments, all or some of the functions of the functional units may be implemented by using software, hardware, firmware, or any combination thereof. When software is used to implement the embodiments, all or some of the embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A signal transmission method, comprising:
receiving first request signaling, wherein the first request signaling is used to perform a first operation, and the first operation is an operation related to an antenna panel; and
sending answer signaling for responding to the first request signaling, wherein the answer signaling indicates information about a second operation related to the antenna panel.

2. The method according to claim 1, wherein the answer signaling for the first request signaling comprises acknowledgment information.

3. The method according to claim 1, wherein the answer signaling for the first request signaling comprises negative acknowledgment information.

4. The method according to any one of claims 1 to 3, wherein the answer signaling further comprises the information about the second operation.

5. The method according to claim 1, 2, or 4, wherein the first operation is the same as the second operation.

6. The method according to claim 1, 3, or 4, wherein the first operation is different from the second operation.

7. The method according to any one of claims 1 to 6, comprising:
receiving second request signaling, wherein the second request signaling indicates a terminal device to perform the second operation; and
performing, by the terminal device, the second operation based on the second request signaling.

8. The method according to any one of claims 1 to 7, wherein the first operation or the second operation comprises at least one of the following:
panel activation, panel deactivation, panel measurement, panel measurement result reporting, panel switching, panel status reporting, and panel transmission.

9. The method according to any one of claims 1 to 8, wherein the information about the second operation comprises at least one of the following:
a panel index, a panel group index, an activated state of a panel or a panel group, a deactivated state of a panel or a panel group, identifiers of a plurality of panels that simultaneously receive a signal or a channel, state identifiers of the plurality of panels that simultaneously receive a signal or a channel, identifiers of a plurality of panels that simultaneously send a signal or a channel, state identifiers of the plurality of panels that simultaneously send a signal or a channel, identifiers of one or more panel groups that simultaneously receive a signal or a channel, state identifiers of the one or more panel groups that simultaneously receive a signal or a channel, identifiers of one or more panel groups that simultaneously send a signal or a channel, state identifiers of the one or more panel groups that simultaneously send a signal or a channel, a latency of switching between panels and/or panel groups, a panel status mode, a panel status mode index, panel activation duration, a panel activation periodicity, a start/end time point of panel activation, a panel activation time percentage, and a panel activation time offset.

10. A signal transmission method, comprising:
sending first request signaling, wherein the first request signaling is used to perform a first operation, and the first operation is an operation related to an antenna panel; and
receiving answer signaling for responding to the first request signaling, wherein the answer signaling indicates information about a second operation related to the antenna panel.

11. The method according to claim 10, wherein the answer signaling for the first request signaling comprises acknowledgment information.

12. The method according to claim 10, wherein the answer signaling for the first request signaling comprises negative acknowledgment information.

13. The method according to any one of claims 10 to 12, wherein the answer signaling further comprises the information about the second operation.

14. The method according to claim 10, 11, or 13, wherein the first operation is the same as the second operation.

15. The method according to claim 10, 12, or 13, wherein the first operation is different from the second operation.

16. The method according to any one of claims 10 to 15, comprising:
sending second request signaling, wherein the second request signaling indicates a terminal device to perform the second operation.

17. The method according to any one of claims 10 to 16, wherein the first operation or the second operation comprises at least one of the following:
panel activation, panel deactivation, panel measurement, panel measurement result reporting, panel switching, panel status reporting, and panel transmission.

18. The method according to any one of claims 10 to 17, wherein the information about the second operation comprises at least one of the following:
a panel index, a panel group index, an activated state of a panel or a panel group, a deactivated state of a panel or a panel group, identifiers of a plurality of panels that simultaneously receive a signal or a channel, state identifiers of the plurality of panels that simultaneously receive a signal or a channel, identifiers of a plurality of panels that simultaneously send a signal or a channel, state identifiers of the plurality of panels that simultaneously send a signal or a channel, identifiers of one or more panel groups that simultaneously receive a signal or a channel, state identifiers of the one or more panel groups that simultaneously receive a signal or a channel, identifiers of one or more panel groups that simultaneously send a signal or a channel, state identifiers of the one or more panel groups that simultaneously send a signal or a channel, a latency of switching between panels and/or panel groups, a panel status mode, a panel status mode index, panel activation duration, a panel activation periodicity, a start/end time point of panel activation, a panel activation time percentage, and a panel activation time offset.

19. A signal transmission apparatus, comprising:
a communication unit, configured to receive first request signaling, wherein the first request signaling is used to perform a first operation, and the first operation is an operation related to an antenna panel, wherein
the communication unit is further configured to send answer signaling for responding to the first request signaling, wherein the answer signaling indicates information about a second operation related to the antenna panel.

20. The apparatus according to claim 19, wherein the answer signaling for the first request signaling comprises acknowledgment information.

21. The apparatus according to claim 19, wherein the answer signaling for the first request signaling comprises negative acknowledgment information.

22. The apparatus according to any one of claims 19 to 21, wherein the answer signaling further comprises the information about the second operation.

23. The apparatus according to claim 19, 20, or 22, wherein the first operation is the same as the second operation.

24. The apparatus according to claim 19, 21, or 22, wherein the first operation is different from the second operation.

25. The apparatus according to any one of claims 19 to 24, wherein
the communication unit is further configured to receive second request signaling, wherein the second request signaling indicates a terminal device to perform the second operation; and
the apparatus comprises a processing unit, configured to perform the second operation based on the second request signaling.

26. The apparatus according to any one of claims 19 to 25, wherein the first operation or the second operation comprises at least one of the following:
panel activation, panel deactivation, panel measurement, panel measurement result reporting, panel switching, panel status reporting, and panel transmission.

27. The apparatus according to any one of claims 19 to 26, wherein the information about the second operation comprises at least one of the following:
a panel index, a panel group index, an activated state of a panel or a panel group, a deactivated state of a panel or a panel group, identifiers of a plurality of panels that simultaneously receive a signal or a channel, state identifiers of the plurality of panels that simultaneously receive a signal or a channel, identifiers of a plurality of panels that simultaneously send a signal or a channel, state identifiers of the plurality of panels that simultaneously send a signal or a channel, identifiers of one or more panel groups that simultaneously receive a signal or a channel, state identifiers of the one or more panel groups that simultaneously receive a signal or a channel, identifiers of one or more panel groups that simultaneously send a signal or a channel, state identifiers of the one or more panel groups that simultaneously send a signal or a channel, a latency of switching between panels and/or panel groups, a panel status mode, a panel status mode index, panel activation duration, a panel activation periodicity, a start/end time point of panel activation, a panel activation time percentage, and a panel activation time offset.

28. A signal transmission apparatus, comprising:
a communication unit, configured to send first request signaling, wherein the first request signaling is used to perform a first operation, and the first operation is an operation related to an antenna panel, wherein
the communication unit is further configured to receive answer signaling for responding to the first request signaling, wherein the answer signaling indicates information about a second operation related to the antenna panel.

29. The apparatus according to claim 28, wherein the answer signaling for the first request signaling comprises acknowledgment information.

30. The apparatus according to claim 28, wherein the answer signaling for the first request signaling comprises negative acknowledgment information.

31. The apparatus according to any one of claims 28 to 30, wherein the answer signaling further comprises the information about the second operation.

32. The apparatus according to claim 28, 29, or 31, wherein the first operation is the same as the second operation.

33. The apparatus according to claim 28, 30, or 31, wherein the first operation is different from the second operation.

34. The apparatus according to any one of claims 28 to 33, wherein
the communication unit is further configured to send second request signaling, wherein the second request signaling indicates a terminal device to perform the second operation.

35. The apparatus according to any one of claims 28 to 34, wherein the first operation or the second operation comprises at least one of the following:
panel activation, panel deactivation, panel measurement, panel measurement result reporting, panel switching, panel status reporting, and panel transmission.

36. The apparatus according to any one of claims 28 to 35, wherein the information about the second operation comprises at least one of the following:
a panel index, a panel group index, an activated state of a panel or a panel group, a deactivated state of a panel or a panel group, identifiers of a plurality of panels that simultaneously receive a signal or a channel, state identifiers of the plurality of panels that simultaneously receive a signal or a channel, identifiers of a plurality of panels that simultaneously send a signal or a channel, state identifiers of the plurality of panels that simultaneously send a signal or a channel, identifiers of one or more panel groups that simultaneously receive a signal or a channel, state identifiers of the one or more panel groups that simultaneously receive a signal or a channel, identifiers of one or more panel groups that simultaneously send a signal or a channel, state identifiers of the one or more panel groups that simultaneously send a signal or a channel, a latency of switching between panels and/or panel groups, a panel status mode, a panel status mode index, panel activation duration, a panel activation periodicity, a start/end time point of panel activation, a panel activation time percentage, and a panel activation time offset.

37. A communication apparatus, comprising a processor and a memory, wherein
the memory is configured to store a computer program; and
the processor is configured to execute the computer program stored in the memory, so that the apparatus implements the method according to any one of claims 1 to 9 or the method according to any one of claims 10 to 18.

38. A communication apparatus, comprising at least one processor and an interface, wherein the at least one processor is configured to execute a computer program, so that the apparatus implements the method according to any one of claims 1 to 9 or the method according to any one of claims 10 to 18.

39. A computer-readable storage medium, configured to store a computer program, wherein when the computer program is run on a computer, the computer is enabled to perform the method according to any one of claims 1 to 9 or the method according to any one of claims 10 to 18.

40. A computer program product, wherein when the computer program product runs on a communication device, the communication device is enabled to perform the method according to any one of claims 1 to 9 or the method according to any one of claims 10 to 18.
